# EUROPÄISCHE PATENTSCHRIFT

(11) **EP 1 064 058 B1**
(45) Veröffentlichungstag und Bekanntmachung des Hinweises auf die Patenterteilung: **11.12.2002**
(21) Anmeldenummer: 99915719.1
(22) Anmeldetag: 26.03.1999
(51) Int. Cl.: A63F 13/02

(54) **JOYPAD FÜR DIE COMPUTERBEDIENUNG**
JOY PAD FOR OPERATING A COMPUTER
MANETTE-CLAVIER DESTINEE A LA COMMANDE D'UN ORDINATEUR

(30) Priorität: 26.03.1998 DE 19814638
(43) Veröffentlichungstag der Anmeldung: 03.01.2001
(73) Patentinhaber: Buschko, Mike, 12247 Berlin (DE); Günther, Michael, 12209 Berlin (DE); Glowatzki, Timo I., 12163 Berlin (DE)
(72) Erfinder: BUSCHKO, Mike, Berlin D-12247 (DE)
(74) Vertreter: Gulde, Klaus W., Dipl.-Chem.
(86) Internationale Anmeldenummer: EP9902158
(87) Internationale Veröffentlichungsnummer: WO99048577

(56) Entgegenhaltungen:
- US-A- 5 046 739
- US-A- 5 501 458
- "psGameGrip" RETRIEVED FROM THE INTERNET, 1. Januar 1999, Seite 1 XP002107577 http://www.superufo.com/psgamegrip.htm

## Beschreibung

Die Erfindung bezieht sich auf einen Joypad gemäß dem Oberbegriff des Anspruches 1.

Joypads sind Computerbedienvorrichtungen, die dazu dienen, insbesondere bei Computerspielen die entsprechenden Befehle ergonomisch günstig und schnell im Rahmen des Spielprogrammes auf den Rechner zu übertragen. Die Joypads sind mit einer Plastikverkleidung ausgestattet und besitzen ind der Regel zwei Griffe, die mit den Händen umfaßt werden können. Beim Umfassen dieser Griffe des Joypads ist es möglich entsprechende Knöpfe und Schalter für die Befehlsauslösung zu bedienen. Die Griffe sind mit der linken und mit der rechten Hand zu fassen.

Computerspiele verlangen häufig schnelle Reaktionen, eine hohe Konzentration und eine gewisse Beherrschung von Emotionen. Häufig entsteht beim Spielen mit dem Computer ein Streßgefühl, das dazu führt, daß der Bediener feuchte Hände bekommt und dadurch die Griffigkeit der Plastikverkleidungen des Joypads nachteilig verändert wird. Da häufig auch ein Wechsel der Mitspieler am gleichen Joypad erfolgt, ist damit auch eine gewisse nachteilige Hygiene verbunden.

Aus der US-A-5046739 ist eine aus einem Stück bestehende Griffschale für einen Controller bekannt. Diese Griffschale besteht aus harten Materialien wie Holz oder Plastik. Die Griffschale wird im Griffbereich eines Controllers aufgeschoben und soll dort ein ergonomisches Greifen der Eingabeeinheit gewährleisten. Die hier beschriebenen Griffschalen haben den Nachteil, daß sie in und entgegen der Aufschubrichtung keinen festen Halt mit der Eingabeeinheit gewährleisten. Der Benutzer muß daher neben der Bedienung der Eingabevorrichtung auch dafür Sorge tragen, daß die Griffschalen die Eingabeeinheit fest umschließen. Ein weiterer Nachteil der hier vorgeschlagenen Griffschalen besteht in der Notwendigkeit, aufgrund der vorgegebenen Ausformung des Griffbereiches immer exakt identisch geformte Griffschalen zur Verfügung zu stellen. Anders geformte Controller bzw. geringfügige Änderungen bei technischen Weiterentwicklungen beenden die Einsatzmöglichkeiten dieser aus harten Materialien gefertigten Griffschalen.

In der US 5501458 ist eine Joypadabdeckung beschrieben, die verschiedene Nachteile aufweist. So werden die Griffflächen mit einzelnen Abdeckungen versehen, die beispielsweise mit einem Klettband auf den Griffflächen fixiert werden. Das erfordert ein Belegen der Griffflächen mit Klettstreifen, die sich mit den auf der Abdeckung befindlichen Streifen verbinden lassen. Dadurch wird die Handhabung erschwert. Wenn mehrere Spieler mit einem Joypad spielen wollen, ist es nicht möglich, daß jeder Spieler seine eigene Schutzabdekkung benutzt. Die Schutzabdeckung ist praktisch mit dem Joypad verbunden und läßt sich ohne größeren Aufwand nicht austauschen. Nach Anbringung der Schutzabdeckung muß mit dieser auch gearbeitet werden. Ein flexibles, wechselndes Entfernen und Wiederanbringen ist nicht möglich. Ein weiterer Nachteil ist die Kantenbildung der Abdeckung im Griffbereich. Dadurch können bei intensiver Benutzung des Joypads durchaus schmerzhafte Veränderungen an den Innenseiten der Hände entstehen.

Der Erfindung liegt nun die Aufgabe zugrunde, die Griffoberfläche von an sich handelsüblichen Joypads so zu verändern, daß Probleme hinsichtlich der Griffigkeit und der Hygiene weitestgehend vermieden werden können.

Die Lösung der Aufgabe erfolgt mit dem kennzeichnenden Teil des Anspruches 1. Vorteilhafte Weiterbildungen sind in den Unteransprüchen genannt.

Das erfindungsgemäße Umhüllen eines Joypads bringt verschiedene Vorteile. Durch die Wahl des Materials ist es möglich, die während des Computerspielens möglicherweise auftretende Handfeuchtigkeit aufzunehmen, so daß die Griffigkeit beim Bedienen des Joypads keiner Einschränkungen unterliegt. Vorteilhafterweise können diese Umhüllungen vom Joypad ohne weiteres entfernt werden, so daß ein zweiter Mitspieler seine eigene Umhüllung auf dem Joypad anschließend fixieren kann. Die Wahl des Materials ermöglicht auch eine unkomplizierte Reinigung der Umhüllung. Die Fixierung kann durch entsprechende Verschlußelemente erfolgen, sie kann aber auch durch die Auswahl elastischen Materials, das sich ganz eng und stramm um die Form des Joypadgriffes legen läßt, erfolgen Ein weiterer Vorteil der Erfindung ist die Möglichkeit des Anbringens von Werbung auf den Oberflächen des Joypads.
Die Verwendung netzartiger Materialien ermöglicht es die Umhüllung optisch zurückzunehmen, ohne daß vorteile der Erfindung beeinträchtigt werden.

Anhand eines Ausführungsbeispieles und einer Zeichnung mit mehreren Figuren wird die Erfindung näher erläutert.

Es zeigen:
Fig. 1 ein Joypad mit einer Umhüllung,
Fig. 2 eine Umhüllung mit Klappe,
Fig. 3 eine Umhüllung ohne Verschlußelemente,
Fig. 4 eine Schnittdarstellung einer Umhüllung und
Fig. 5 eine Umhüllung mit Verlängerungsteil.

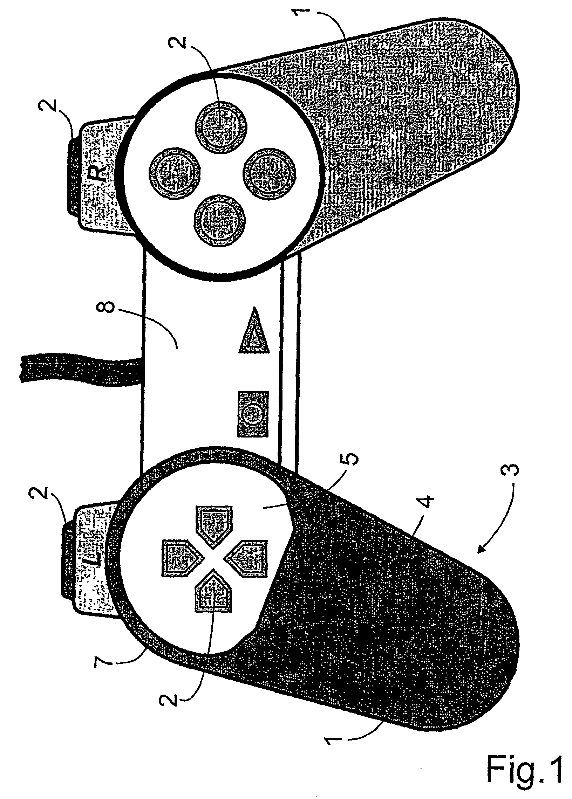

In Fig. 1 ist ein typischer Joypad dargestellt. Er besteht aus zwei Griffen 1, Bedienelementen 2 und einem die Griffe 1 verbindenen Steg 8. Der linke Griff 1 weist eine Umhüllung 3 auf. Die Umhüllung 3 besteht aus einem Griffteil 4 und einem Seitenteil 7. Das Seitenteil 7 ist um das Bedienteil 2 herum angeordnet und verbindet im Bereich des Griffes 1 ein Oberteil 9 mit einem hier nicht sichtbaren Unterteil 6. Zur Bedienung der Bedienelemente 2 ist ein Bedienfenster 5 vorgesehen.

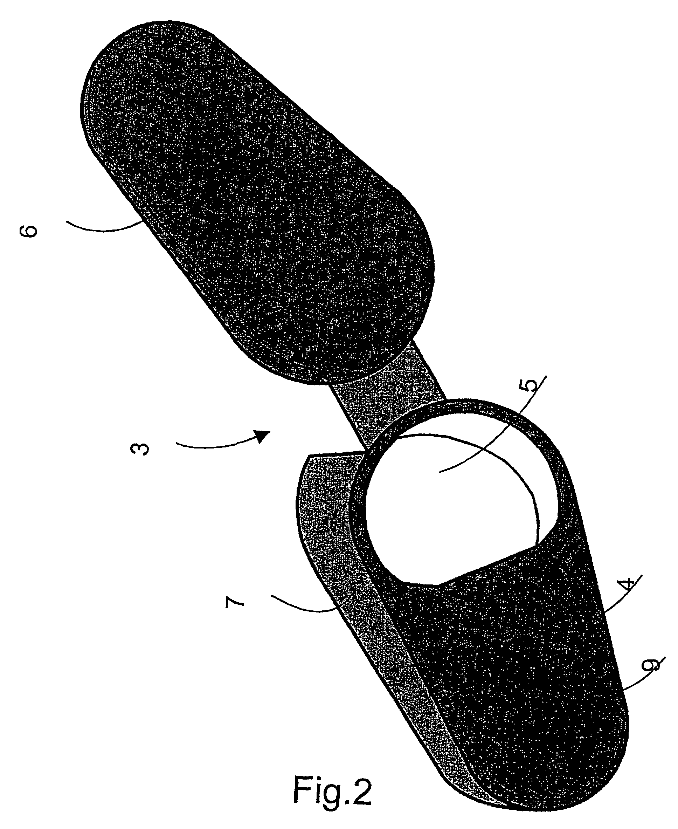

In Fig. 2 ist eine Umhüllung in aufgeklappter Form dargestellt. Das Unterteil 6 ist hier als Klappe ausgeführt und läßt sich nach dem Aufschieben der Umhüllung 3 auf dem Griff 1 mittels hier nicht dargestellter Verschlußelemente mit dem Seitenteil 7 verbinden.

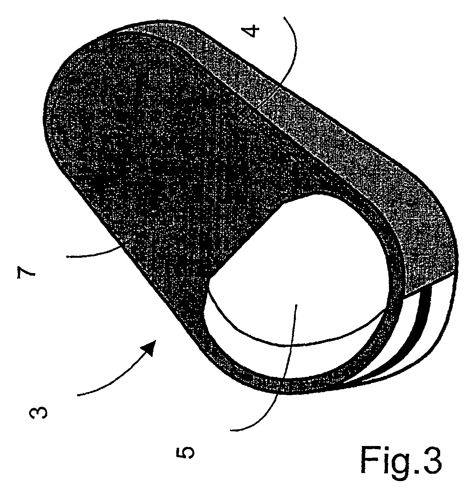

In Fig. 3 ist eine Umhüllung 3 dargestellt, die einteilig ausgeführt ist. Auf Grund von dehnbarem elastischen Material läßt sich diese Umhüllung als Art Strumpf über den Griff 1 und über die Bedienelemnete 2 ziehen wobei das Bedienfenster 5 die Bedienelemente 2 für die Bedienung frei läßt.

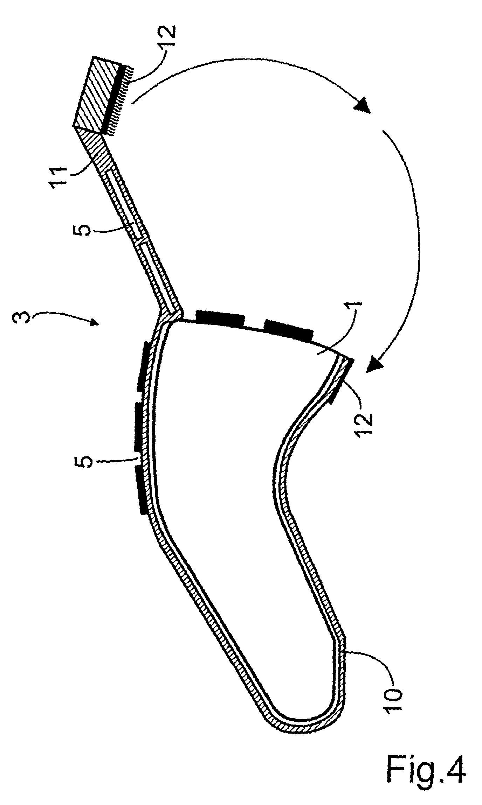

Fig. 4 zeigt eine Umhüllung 3 in Schnittdarstellung. Die Umhüllung 3 ist strumpfartig über den Griff 1 des Joypads gezogen. Mittels einer Klappe 11 und der Verschlußelemente 12 wird die Umhüllung 3 auf dem Joypad fixiert. Die Bedienfenster 5 ermöglichen ohne Einschränkung das Benutzen des Joypads. Um ein Verrutschen der Umhüllung 3 während der Benutzung einzuschränken, weist ihre Innenseite eine rutschmindernde Beschichtung 10 auf.

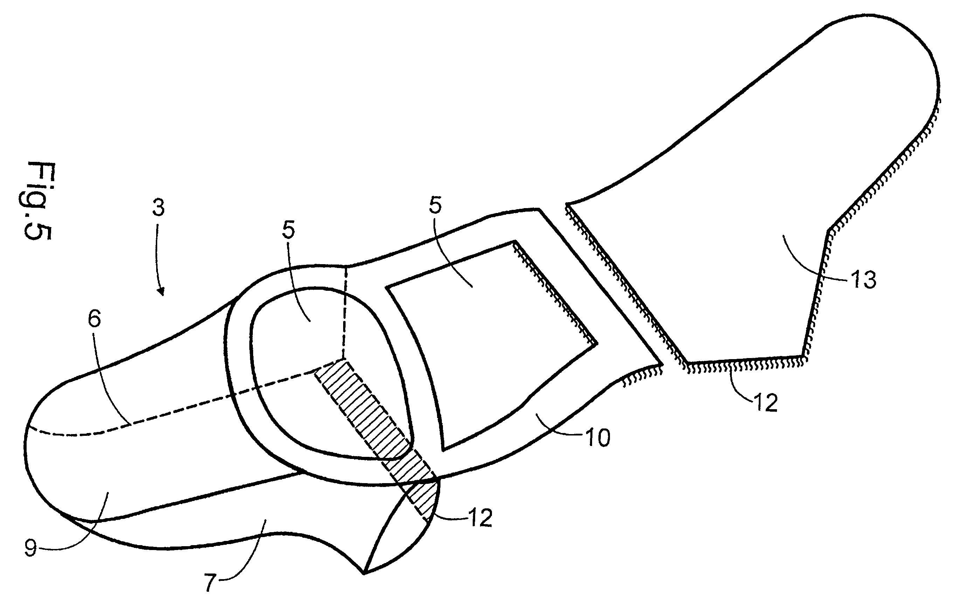

Fig. 5 zeigt eine weitere erfindungsgemäße Ausführung der Umhüllung 3 in perspektivischer Darstellung. Die verbundenen Teile Unterteil 6, Seitenteil 7 und Oberteil 9 der Umhüllung 3 decken den Griffbereich des Joypads vollständig ab. Über die Bedienfenster 5 wird die Benutzung ermöglicht. Die Klappe 10 ist mittels eines Verlängerungsteiles 13 in Abhängigkeit von der Ausbildung des Joypads verlängerbar und über Verschlußelemente 12 miteinander verbindbar.

### Bezugszeichenliste

- 1: Griff
- 2: Bedienelement
- 3: Umhüllung
- 4: Griffteil
- 5: Bedienfenster
- 6: Unterteil
- 7: Seitenteil
- 8: Steg
- 9: Oberteil
- 10: Beschichtung
- 11: Klappe
- 12: Verschlußelement
- 13: Verlängerungsteil

## Patentansprüche

1. Joypad für die Computerbedienung mit einer Abdeckung im Griffbereich,
**dadurch gekennzeichnet,**
**daß** die Abdeckung als elastische, strumpfartig überziehbare Umhüllung (3) ausgebildet ist.

2. Joypad nach Anspruch 1,
**dadurch gekennzeichnet,**
**daß** die Umhüllung (3) die gesamte Oberfläche des Joypads abdeckt und auch hier fixierbar ist, wobei mindestens die Bedienelemente (2) des Joypads von der Umhüllung (3) nicht abgedeckt sind.

3. Joypads nach einem der Ansprüche 1 oder 2,
**dadurch gekennzeichnet,**
**daß** die Umhüllung (3) durchsichtige Bereiche aufweist.

4. Joypad nach einem der Ansprüche 1 bis 3,
**dadurch gekennzeichnet,**
**daß** die Umhüllung (3) mehrteilig ausgebildet ist.

5. Joypad nach einem der Ansprüche 1 bis 4,
**dadurch gekennzeichnet,**
**daß** die Umhüllung (3) zweiteilig ausgebildet ist.

6. Joypad nach einem der Ansprüche 1 bis 5,
**dadurch gekennzeichnet,**
**daß** die Umhüllung (3) Verschlußelemente (12) aufweist.

7. Joypad nach einem der Ansprüche 1 bis 6,
**dadurch gekennzeichnet,**
**daß** die Verschlußelemente (12) Klettverschlüsse und/oder Druckknöpfe und/oder Reißverschlüsse sind.

8. Joypad nach einem der Ansprüche 1 bis 7,
**dadurch gekennzeichnet,**
**daß** die zweiteilige Umhüllung (3) als Links- und Rechtsform ausgebildet ist.

9. Joypad nach einem der Ansprüche 1 bis 8,
**dadurch gekennzeichnet,**
**daß** die Links- und Rechtsform der Umhüllung (3) miteinander verbunden sind.

10. Joypad nach einem der Ansprüche 1 bis 9,
**dadurch gekennzeichnet,**
**daß** die Umhüllung (3) teilweise oder vollständig eine netzartige Ausbildung aufweist.

11. Joypad nach einem der Ansprüche 1 bis 10,
**dadurch gekennzeichnet,**
**daß** die Umhüllung (3) aus flexiblen waschbaren Materialien besteht.

12. Joypad nach einem der Ansprüche 1 bis 11,
**dadurch gekennzeichnet,**
**daß** die Umhüllung (3) auf der Oberfläche der umhüllten Teile des Joypads nicht unmittelbar haftend befestigt ist.

13. Joypad nach einem der Ansprüche 1 bis 12,
**dadurch gekennzeichnet,**
**daß** die Umhüllung (3) als Werbungsträger ausgebildet ist.

14. Joypad nach einem der Ansprüche 1 bis 13,
**dadurch gekennzeichnet,**
**daß** die Innenseite der Umhüllung (3) eine rutschmindernde Beschichtung aufweist.

## Claims

1. A joypad for operating computers, having a cover within the handling zone, **characterized in that** the cover is designed as an elastic covering (3) which can be put on in a stocking-type fashion.

2. The joypad according to claim 1, **characterized in that** the covering (3) covers the entire surface of the joypad and is fixable in this case as well, wherein at least the operating elements (2) of the joypad are not being covered by the covering (3).

3. The joypad according to claim 1 or 2, **characterized in that** the covering (3) has transparent areas.

4. The joypad according to any of claims 1 to 3, **characterized in that** the covering (3) is designed in a multi-component fashion.

5. The joypad according to any of claims 1 to 4, **characterized in that** the covering (3) is designed in a two-component fashion.

6. The joypad according to any of claims 1 to 5, **characterized in that** the covering (3) has fastening elements (12).

7. The joypad according to any of claims 1 to 6, **characterized in that** the fastening elements (12) are velcro fasteners, and/or snap fasteners and/or zippers.

8. The joypad according to any of claims 1 to 7, **characterized in that** the two-component covering (3) is designed as a left-handed and a right-handed form.

9. The joypad according to any of claims 1 to 8, **characterized in that** the left-handed and right-handed forms of the covering (3) are connected to each other.

10. The joypad according to any of claims 1 to 9, **characterized in that** the covering (3) partially or entirely is of a mesh-type design.

11. The joypad according to any of claims 1 to 10, **characterized in that** the covering (3) is comprised of flexible washable materials.

12. The joypad according to any of claims 1 to 11, **characterized in that** the covering (3) is attached to the surface of the covered portions of the joypad in a fashion involving no direct adhering.

13. The joypad according to any of claims 1 to 12, **characterized in that** the covering (3) is designed as an advertising medium.

14. The joypad according to any of claims 1 to 13, **characterized in that** the inside of the covering (3) has an antislip coating.

## Revendications

1. Manette-clavier pour la commande d'un ordinateur avec un recouvrement au secteur de la manette **caractérisée en ce que** le recouvrement est formé comme enveloppe (3) élastique pouvant être revêtu comme une chaussette.

2. Manette-clavier selon revendication 1, **caractérisée en ce que** l'enveloppe (3) recouvre l'entière surface de la manette-clavier et en est aussi fixable, tout en ne pas couvrant au moins les éléments de conduite (2) de la manette-clavier.

3. Manette-clavier selon l'une des revendications 1 ou 2, **caractérisée en ce que** l'enveloppe (3) contient des secteurs tranparents.

4. Manette-clavier selon l'une des revendications 1 à 3, **caractérisée en ce que** l'enveloppe (3) est formée en plusieurs parties.

5. Manette-clavier selon l'une des revendications 1 à 4, **caractérisée en ce que** l'enveloppe (3) est formé en deux parties.

6. Manette-clavier selon l'une des revendications 1 à 5, **caractérisée en ce que** l'enveloppe (3) contient . des éléments de fermeture (12).

7. Manette-clavier selon l'une des revendications 1 à 6, **caractérisée en ce que** les éléments de fermeture (12) sont des bandes agrippantes et/ou des boutons-poussoirs et/ou des fermetures à glissière.

8. Manette-clavier selon l'une des revendications 1 à 7, **caractérisée en ce que** l'enveloppe (3) en deux parties est formé en forme gauche et forme droite.

9. Manette-clavier selon l'une des revendications 1 à 8, **caractérisée en ce que** la forme gauche et la forme droite de l'enveloppe (3) sont liées l'une à l'autre.

10. Manette-clavier selon l'une des revendications 1 à 9, **caractérisée en ce que** l'enveloppe (3) contient partiellement ou entièrement une formation de manière réticulée.

11. Manette-clavier selon l'une des revendications 1 à 10, **caractérisée en ce que** l'enveloppe (3) est composée de matériaux flexibles lavables.

12. Manette-clavier selon l'une des revendications 1 à 11, **caractérisée en ce que** l'enveloppe (3) est attachée à la surface des parties couvertes de la manette-clavier d'une manière sans adhésion immédiate.

13. Manette-clavier selon l'une des revendications 1 à 12, **caractérisée en ce que** l'enveloppe (3) est formée comme support de publicité.

14. Manette-clavier selon l'une des revendications 1 à 13, **caractérisée en ce que** le côté intérieur de l'enveloppe (3) contient une couche anti-glissant.
